# EUROPEAN PATENT APPLICATION

(11) **EP 4 553 816 A1**
(43) Date of publication of application: **14.05.2025**
(21) Application number: 24204176.2
(22) Date of filing: 02.10.2024
(51) Int. Cl.: G09G 3/20, G09G 3/34

(54) **ELECTRONIC LABEL DEVICE**

(30) Priority: 10.11.2023 TW 112143541
(71) Applicant: VusionGroup S.A., 92000 Nanterre (FR)
(72) Inventor: HUANG, Chao-Hsuan, 744094 TAINAN CITY (TW); CHANG, Lung-Pin, 744094 TAINAN CITY (TW); WANG, Yew-Chun, 744094 TAINAN CITY (TW)
(74) Representative: Zimmermann, Tankred Klaus

(57) **Abstract**

An electronic label device includes a display module and a driving chip. The display module includes a driving substrate and an E-paper film, and the E-paper film is disposed on the driving substrate. The driving chip is disposed on the driving substrate and is electrically connected to the driving substrate. The driving chip drives the E-paper film to display images through the driving substrate. The driving chip includes a memory unit, which stores a plurality of lookup tables corresponding to a plurality of temperature ranges. Each lookup table includes an index corresponding to one of the temperature ranges and a plurality of processing procedures for multiple display colors of the E-paper film, and the index indicates a driving mode of the processing procedures.

## Description

### BACKGROUND

### Technology Field

The present invention relates to an electronic label device and, in particular, to an electronic label device applied to an ESL (electronic shelf labels) system.

### Description of Related Art

In the electronic label device of a conventional ESL (electronic shelf label) system, the display medium includes electrophoretic material. Electrophoretic material is a material that is quite sensitive to temperature, so that different driving procedures (or driving waveforms) are needed to be used in different temperature ranges (temperature zones). In general, these driving procedures corresponding to different temperature ranges are stored in a lookup table (LUT).

In addition, there are generally two driving modes for the conventional electronic label device, such as a synchronous driving mode and an asynchronous driving mode. In the synchronous driving mode, the multiple display colors in one temperature range have the same stage time, and are driven simultaneously. In the asynchronous driving mode, the multiple display colors in one temperature range do not have the same stage time, and they are driven independently at different times.

In the synchronous driving mode, the lookup table that stores the driving procedures (or waveforms) occupies a relatively small memory space, but the variability of these driving procedures is poor and the procedure planning is relatively inflexible. In addition, in the synchronization driving mode, it is difficult to control the electrophoretic material at low temperature (e.g. close to 0°C), which will result in poor optical quality of the displayed images.

Compared with the synchronous driving mode, the lookup table used in the asynchronous driving mode occupies a larger memory space, but the driving procedures have better variability and is more flexible in procedure planning. In the asynchronous driving mode, the electrophoretic material can be controlled easier at low temperature, and the optical quality of the displayed images is better.

However, the driving architecture of the conventional electronic label devices can only select from one of the synchronous driving mode and the asynchronous driving mode (generally using the synchronous driving mode) before leaving the factory, and cannot switch between the synchronous and asynchronous driving modes according to the display quality at different temperatures. There is no flexibility in use.

### SUMMARY

The present invention is to provide an electronic label device that has application flexibility and can flexibly adjust the driving mode to meet the display quality requirements at different temperatures.

To achieve the above, an electronic label device of this invention includes a display module and a driving chip. The display module includes a driving substrate and an E-paper film, and the E-paper film is disposed on the driving substrate. The driving chip is disposed on the driving substrate and electrically connected to the driving substrate. The driving chip drives the E-paper film to display images through the driving substrate. The driving chip includes a memory unit, which stores a plurality of lookup tables corresponding to a plurality of temperature ranges. Each of the lookup tables includes an index corresponding to one of the temperature ranges and a plurality of processing procedures for multiple display colors of the E-paper film, and the index indicates a driving mode of the processing procedures.

In one embodiment, the E-paper film comprises an electrophoretic material.

In one embodiment, the multiple display colors include, for example, a group of black and white, a group of red, black and white, a group of red, black, white and yellow, or a group of any displayable colors.

In one embodiment, each of the lookup tables further comprises a processing procedure corresponding to a common voltage of the multiple display colors.

In one embodiment, the driving mode includes a synchronous driving mode and an asynchronous driving mode.

In one embodiment, the memory unit comprises an OTP (One Time Programmable) ROM or an MTP (Multi-time Programmable) ROM.

In one embodiment, the driving chip further includes a scan driving circuit, the driving substrate includes a plurality of pixel units, and the scan driving circuit is electrically connected to the pixel units via a plurality of scan lines.

In one embodiment, the driving chip further includes a data driving circuit, and the data driving circuit is electrically connected to the pixel units via a plurality of data lines.

In one embodiment, the electronic label device further includes a system circuit board electrically connected to the driving substrate and the driving chip.

In one embodiment, the electronic label device further includes a connection circuit board connected to the system circuit board and the driving substrate, and the system circuit board is electrically connected to the driving substrate and the driving chip via the connection circuit board.

As mentioned above, in the electronic label device of this invention, the driving chip can drive the E-paper film to display images, the memory unit of the driving chip to store a plurality of lookup tables corresponding to a plurality of temperature ranges. Each of the lookup tables includes an index corresponding to one of the temperature ranges and a plurality of processing procedures for multiple display colors of the E-paper film, and the index indicates a driving mode of the processing procedures. Based on the above-mentioned design, compared to the conventional art, the electronic label device of this invention can flexibly adjust the driving mode to meet the display quality requirements at different temperatures, so that this invention has good application flexibility and good display quality, and the increased overall cost can be sufficiently limited.

### BRIEF DESCRIPTION OF THE DRAWINGS

The invention will become more fully understood from the detailed description and accompanying drawings, which are given for illustration only, and thus are not limitative of the present invention, and wherein:
FIG. 1 is a schematic diagram showing an electronic label device according to an embodiment of this invention;
FIG. 2 is a sectional view of the electronic label device of FIG. 1;
FIG. 3 is a functional block diagram of a driving chip in the electronic label device of FIG. 1;
FIG. 4 is a schematic diagram showing an example of a lookup table corresponding to one of the temperature ranges that stored in the memory unit of FIG. 3;
FIG. 5A is a schematic diagram showing the driving procedures (driving waveforms) in the synchronous driving mode stated in the lookup table of FIG. 4; and
FIG. 5B is a schematic diagram showing the driving procedures (driving waveforms) in the asynchronous driving mode stated in the lookup table of FIG. 4.

### DETAILED DESCRIPTION OF THE INVENTION

The present invention will be apparent from the following detailed description, which proceeds with reference to the accompanying drawings, wherein the same references relate to the same elements.

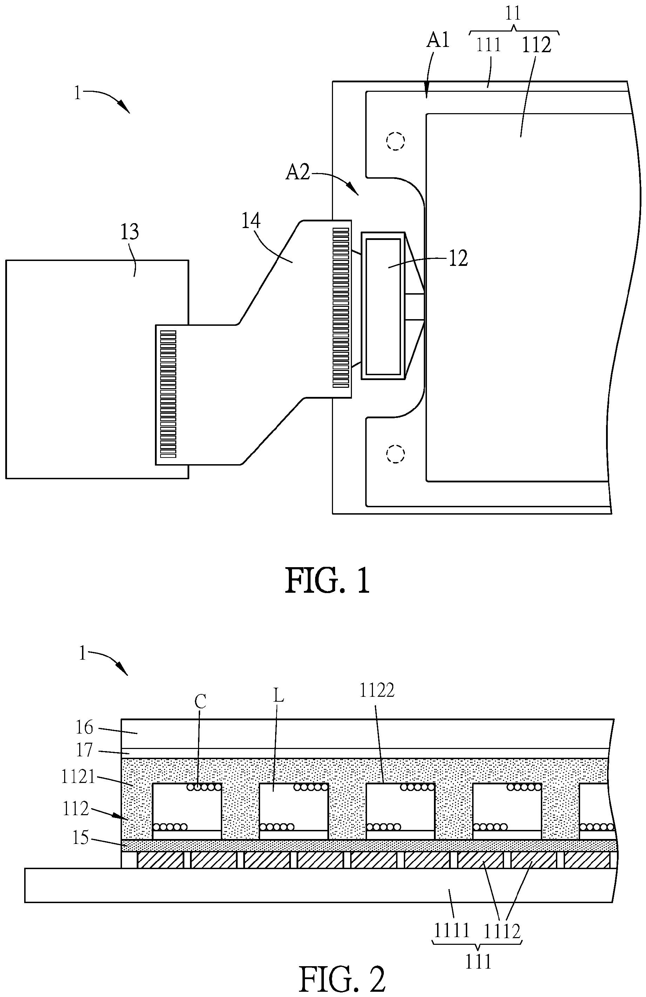

FIG. 1 is a schematic diagram showing an electronic label device 1 according to an embodiment of this invention, and FIG. 2 is a sectional view of the electronic label device 1 of FIG. 1.

As shown in FIGS. 1 and 2, the electronic label device 1, which is applied to an ESL (electronic shelf label) system, includes a display module 11 and a driving chip 12. In addition, the electronic label device 1 may further include a system circuit board 13 and a connection circuit board 14.

The display module includes a driving substrate 111 and an E-paper film 112. The E-paper film 112 is disposed on the driving substrate 111, and the driving substrate 111 can control the E-paper film to display images. In this embodiment, the driving substrate 111 has a display arrangement area A1 and a peripheral area A2 disposed adjacent to the display arrangement area A1. In this case, the display arrangement area A1 is the area for configuring the E-paper film 112, and the peripheral area A2 is the area other than the display arrangement area A1 and connected to the display arrangement area A1. For example, the peripheral area A2 of this embodiment surrounds the periphery of the display arrangement area A1.

As shown in FIG. 2, in this embodiment, the driving substrate 111 may include a substrate 1111 and a plurality of pixel units 1112. The pixel units 1112 are disposed on the surface of the substrate 1111 facing the E-paper film 112. The material of the substrate 1111 can be changed according to product requirements. The substrate 1111 may be a flexible substrate or an inflexible substrate. For example, the substrate 1111 can be a glass substrate, a plastic substrate, or a resilient substrate. The material of the resilient substrate may be, for example but not limited to, polyimide (PI), polyethylene terephthalate (PET), or the likes. In addition, each pixel unit 1112 may include at least one switching element and a pixel electrode (not shown). The switching element may be a thin-film transistor (TFT), for example, so that the driving substrate 111 becomes an active matrix (AM) driving substrate (driving back board), which can control the formation of the electric field of each pixel unit 1112. In different embodiments, the driving substrate 111 may be a passive matrix (PM) driving substrate, and this invention is not limited thereto.

The E-paper film 112 is, for example, a bistable E-paper film, which has the advantages of power saving and wide viewing angle. The bistable E-paper film can be, for example but not limited to, a microcapsule type E-paper, a micro-cup type E-paper, or the likes. The display medium of the E-paper film 112 may include electrophoretic material. The electrophoretic material include a plurality of charged light-colored pigment particles and a dark-colored medium solution, and the pigment particles and the medium solution are respectively accommodated in a plurality of microcapsules. The microcapsules can be combined with an adhesive. Alternatively, the content of the electrophoretic material can be a combination of dark-colored pigment particles and light-colored medium solution. In another case, the content of the electrophoretic material can be a combination of pigment particles of multiple colors and a light-colored medium solution. This invention is not limited thereto.

Referring to FIG. 2, the E-paper film 112 of this embodiment includes a plurality of charged particles C, a medium solution L, and an accommodation structure 1121. The accommodation structure 1121 has a plurality of micro-cups or a plurality of microcapsules. In this case, the accommodation structure 1121 has, for example, a plurality of micro-cups 1122. The charged particles C are suspended in the medium solution L, and the mixture of the charged particles C and the medium solution L is accommodated in the micro-cups 1122.

In addition, the electronic label device 1 of this embodiment further includes an adhesive layer 15, another substrate 16 and a common electrode layer 17. The accommodation structure 1121 is located between the substrate 16, the common electrode layer 17 and the driving substrate 111. The substrate 16 can be a protective substrate, which can be a flexible substrate or an inflexible substrate, such as a glass substrate, a plastic substrate, or a resilient substrate. The material of the substrate 16 may be the same as or different from the material of the substrate 1111, and this invention is not limited thereto. In addition, the common electrode layer 17 is a transparent electrode layer, which is disposed between the accommodation structure 1121 and the substrate 16, and is located corresponding to the pixel units 1112 of the driving substrate 111. The material of the common electrode layer 17 may be, for example but not limited to, indium tin oxide (ITO), indium zinc oxide (IZO), aluminum zinc oxide (AZO), gallium zinc oxide (GZO) or zinc oxide (ZnO).

The adhesive layer 15 is disposed between the E-paper film 112 and the driving substrate 111. Herein, the adhesive layer 15 is used to adhere the E-paper film 112 to the driving substrate 111, so that the E-paper film 112 can completely cover the pixel units 1112 in the normal direction of the substrate 1111. Therefore, when a voltage difference is applied between the pixel electrode of the pixel unit 1112 and the common electrode layer 17 to generate an electric field, the charged particles C in the accommodation structure 1121 can be driven to move and thus reflect ambient light to appear the color of the charged particles C or the medium solution L, thereby displaying images.

Referring to FIG. 1 again, the driving chip 12 is arranged adjacent to the E-paper film 112 and disposed on the driving substrate 111. In this embodiment, the driving chip 12 is disposed on the peripheral area A2 of the driving substrate 111, and is electrically connected to the driving substrate 111. Accordingly, the driving chip 12 can drive the E-paper film 112 to display images through the driving substrate 111. Herein, the driving chip 12 can be an integrated circuit (IC) and is disposed on the peripheral area A2 by using Chip-On-Glass (COG) technology. The technical content of the driving chip 12 will be introduced below.

The system circuit board 13 is electrically connected to the driving substrate 111 and the driving chip 12 for controlling the display module 11 to display images. The system circuit board 13 may be, for example, a printed circuit board, which may include a main controller. The main controller may include at least one microcontroller unit (MCU) to control the operations of the electronic label device 1.

The two sides of the connection circuit board 14 are connected to the system circuit board 13 and the driving substrate 111 respectively, and the system circuit board 13 can be electrically connected to the driving substrate 111 and the driving chip 12 via the connection circuit board 14. Specifically, the connection circuit board 14 of this embodiment is, for example but not limited to, a flexible printed circuit (FPC), and the driving substrate 111 (the driving chip 12) and the system circuit board 13 are respectively connected (electrically connected) to the opposite sides of the connection circuit board 14. Therefore, the main controller of the system circuit board 13 can be electrically connected to the driving substrate 111 and the driving chip 12 through the connection circuit board 14, thereby providing and transmitting driving signals to the driving substrate 111 to control the E-paper film 112 to display images.

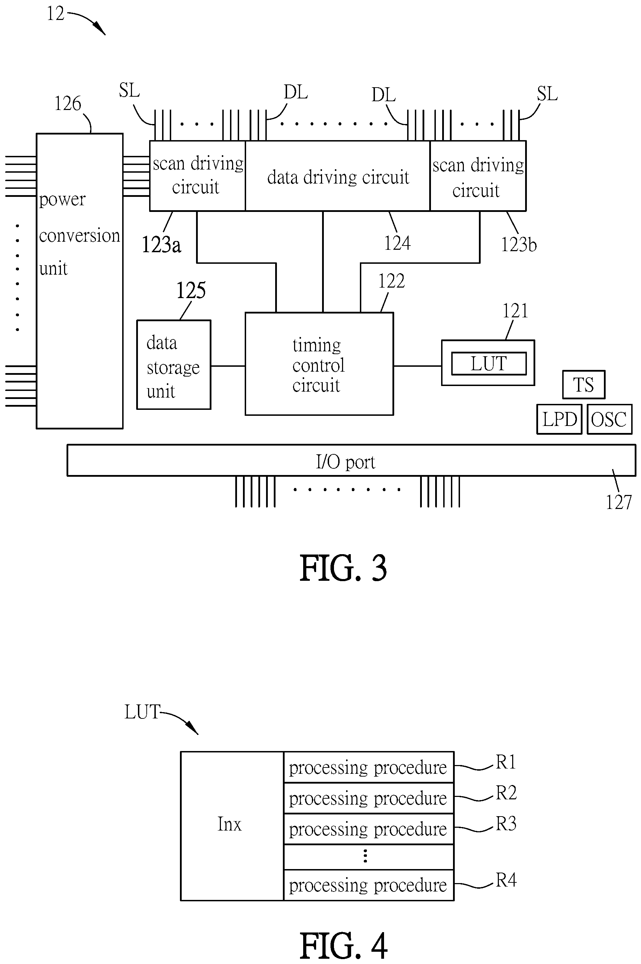

FIG. 3 is a functional block diagram of a driving chip 12 in the electronic label device 1 of FIG. 1.

As shown in FIG. 3, the driving chip 12 of this embodiment includes a memory unit 121. In addition, the driving chip 12 of this embodiment further includes a timing control circuit (Tcon) 122, at least one scan driving circuit, a data driving circuit 124, and a data storage unit 125. In this case as shown in FIG. 3, the driving chip 12 includes, for example, two scan driving circuits 123a and 123b.

The memory unit 121 is electrically connected to the timing control circuit 122. The timing control circuit 122 can store data in the memory unit 121, and the timing control circuit 122 can also retrieve the stored data from the memory unit 121. The timing control circuit 122 can further control the display module 11 to display images according to the data stored in the memory unit 121. In this embodiment, the memory unit 121 stores a plurality of lookup tables LUT corresponding to a plurality of temperature ranges (only one look-up table LUT is shown in FIG. 3 as an example), and the data of these lookup tables LUT may at least include a plurality of processing procedures for multiple display colors of the display module 11 and a processing procedure of a common voltage at different temperature zones (temperature ranges). In other words, the number of temperature ranges stored in the memory unit 121 is the same as the number of lookup tables, and the temperature ranges and the lookup tables have a one-to-one correspondence. For example, regarding the total temperature range from 0°C to 60°C, the temperature range from 0°C to 5°C corresponds to one lookup table, the temperature range from 5°C to 10°C corresponds to another lookup table, ..., and the temperature range from 50°C to 60°C corresponds to another lookup table. In another embodiment, the total temperature range from 0°C to 60°C can be divided into, for example, 14 temperature zones (temperature ranges), and the 14 temperature zones respectively correspond to 14 different lookup tables LUTs.

In some embodiments, the memory unit 121 may be an OTP ROM (One Time Programmable Read Only Memory) or an MTP (Multi-time Programmable) ROM. The memory capacity can be, for example but not limited to, 8k bytes, 16k bytes, or other capacities, and this invention is not limited thereto.

The scan driving circuits 123a and 123b are disposed at two sides of the data driving circuit 124, and are electrically connected to the timing control circuit 122 and the pixel units 1112 of the driving substrate 111, respectively (as shown in FIG. 2). The scan driving circuits 123a and 123b can be electrically connected to the pixel units 1112 of the driving substrate 111 via a plurality of scan lines SL. The data driving circuit 124 is electrically connected to the timing control circuit 122 and the pixel units 1112 of the driving substrate 111 respectively, and the data driving circuit 124 can be electrically connected to the pixel units 1112 of the driving substrate 111 via a plurality of data lines DL. In addition, the data storage unit 125 is electrically connected to the timing control circuit 122. The data storage unit 125 can be, for example but not limited to, a RAM (Random Access Memory), which is used to store display data required for the display module 11 to display images.

Therefore, in the electronic label device 1 of this embodiment, the timing control circuit 122 can transmit vertical clock signals and vertical synchronization signals to the scan driving circuits 123a and 123b respectively, and convert the display data stored in the data storage unit 125 into data signals (data voltages) used by the data driving circuit 124. Then, the data signals, the data of the lookup tables LUT from the memory unit 121, the horizontal clock signals and the horizontal synchronization signals are transmitted to the data driving circuit 124, so that the scan driving circuits 123a and 123b can sequentially conduct the scan lines SL. Afterwards, the data driving circuit 124 can transmit the data signals corresponding to each row of pixel units 1112 to the pixel electrodes of the corresponding pixel units 1112 through the data lines DL, so that an electric field can be generated between the pixel electrode of each pixel unit 1112 and the common electrode layer 17, thereby controlling the E-paper film 112 to display images.

In addition, the driving chip 12 of this embodiment may further include any necessary components, units or circuits, such as, for example but not limited to, a power conversion unit 126 (e.g. a DC-to-DC converter), an input/output (I/O) port 127, a temperature sensor TS, a low power detection (LPD) circuit LPD, an oscillation circuit OSC, or other required components, units or circuits, and this invention is not limited thereto.

FIG. 4 is a schematic diagram showing an example of a lookup table LUT corresponding to one of the temperature ranges that stored in the memory unit 121 of FIG. 3.

In the lookup tables LUT stored in the memory unit 121, one temperature range corresponds to one lookup table LUT. For example, as shown in FIG. 4, each lookup table LUT in this embodiment includes an index Inx corresponding to one of the temperature ranges and a plurality of processing procedures R1, R2 and R3 for multiple display colors of the E-paper film 112. The index Inx indicates a driving mode of the processing procedures R1, R2 and R3. In this case, the driving mode may include a synchronous driving mode or an asynchronous driving mode. For example, if the content of the index Inx is "S", it can represent "a synchronous mode"; and if the content of the index Inx is "A", it can represent "an asynchronous mode". In another case, if the content of the index Inx is "0", it can represent "a synchronous mode"; and if the content of the index Inx is "1", it can represent "an asynchronous mode".

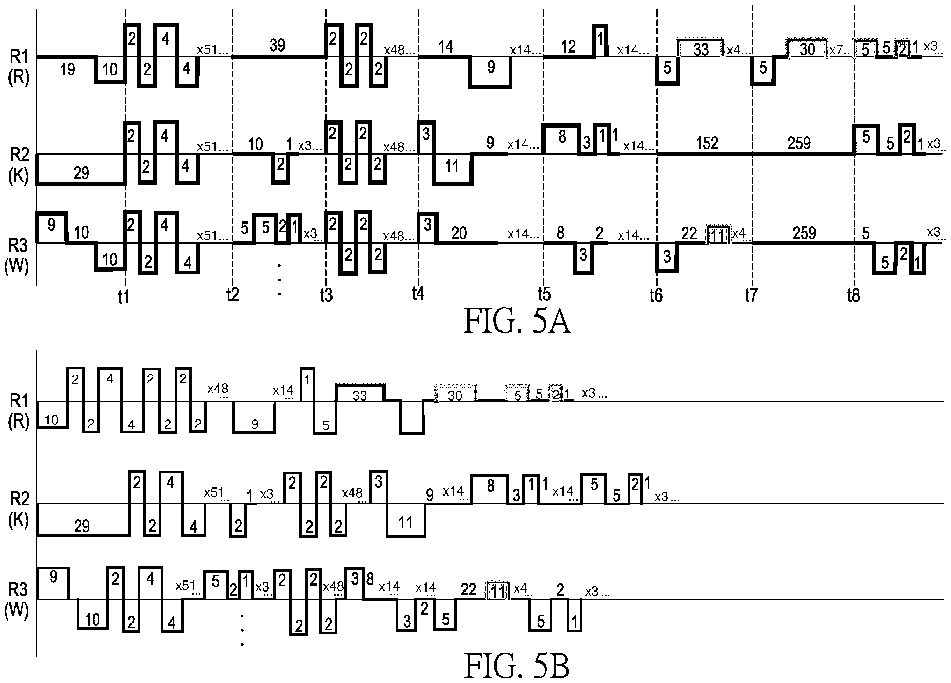

FIG. 5A is a schematic diagram showing the driving procedures R1, R2 and R3 (driving waveforms) in the synchronous driving mode stated in the lookup table LUT of FIG. 4, and FIG. 5A is a schematic diagram showing the driving procedures R1, R2 and R3 (driving waveforms) in the asynchronous driving mode stated in the lookup table LUT of FIG. 4. In this embodiment, FIG. 5A shows the driving procedures R1, R2 and R3 (driving waveforms) for three display colors of red (R), black (K) and white (W) in the synchronous driving mode stated in the lookup table LUT. FIG. 5B shows the driving procedures R1, R2 and R3 (driving waveforms) for three display colors of red (R), black (K) and white (W) in the asynchronous driving mode stated in the lookup table LUT. To be noted, the multiple display colors in FIG. 5A and FIG. 5B includes, for example, three colors, but this invention is not limited to thereto.

In the synchronous driving mode as shown in FIG. 5A, the three display colors (R, K, W) corresponding to one temperature range have the same stage time, and the three display colors are driven at the same time (such as t1, t2..., t8 in FIG. 5A). In the asynchronous driving mode as shown in FIG. 5B, the three display colors (R, K, W) corresponding to one temperature range do not have the same stage time, and the three display colors are driven independently at different times.

In addition to the plurality of processing procedures R1, R2 and R3 for the three display colors, each lookup table LUT may further include a processing procedure R4 of a common voltage (Vcom) corresponding to the three display colors (FIG. 4). That is, the synchronous driving mode of FIG. 5A and the asynchronous driving mode of FIG. 5B need to be cooperated with the processing procedure R4 of a common voltage. To be noted, both of FIG. 5A and FIG. 5B do not show the driving waveform of the common voltage, and the common voltage can be the public voltage of the display module 11.

In addition, those skilled in the art can understand that the aforementioned multiple display colors are, for example but not limited to, red (R), black (K), and white (W). In different embodiments, the multiple display colors may be different. In different embodiments, the multiple display colors may include two, four, or more than four colors. For example, the multiple display colors may include two colors such as, for example but not limited to, black (K) and white (W). In another case, the multiple display colors may include four colors such as, for example but not limited to, red (R), black (K), white (W) and yellow (Y). To be noted, the display colors can be any displayable colors, and this invention is not limited.

As mentioned above, the driving architecture of the conventional electronic label device can only select either the synchronous driving mode or the asynchronous driving mode. However, in the electronic label device 1 of this embodiment (e.g. the embodiments of FIGS. 4 to 5B), each lookup table LUT corresponding to one temperature range includes an index Inx corresponding to the temperature range and a plurality of processing procedures R1, R2 and R3 corresponding to multiple display colors (e.g. R, K and W). The content of the index Inx can indicate that the driving mode of the processing procedures R1, R2 and R3 should be the synchronous driving mode or the asynchronous driving mode. Therefore, before the electronic label device 1 leaves the factory, the designer can flexibly adjust the driving mode according to different temperature ranges, thereby flexibly adjusting the driving mode to respond to the display quality requirements of different temperatures. Accordingly, the electronic label device 1 of this embodiment has good application flexibility and good display quality.

For example, the conventional electronic label device generally adopts a single driving mode (i.e., synchronous driving mode). However, in the synchronous driving mode, it is difficult to control the electrophoretic material at low temperature (e.g. close to 0°C), which will result in poor optical quality of the displayed images. In an application example of the present invention, as shown in Table 1 (see below), there are 14 temperature ranges (temperature zones) are defined between 0°C and 60°C. In this case, if the electronic label device driven with the asynchronous driving mode in all 14 temperature ranges, the memory capacity occupied by all lookup tables will be 8302 bytes, so that the cost of the electronic label device will increase greatly. If the electronic label device driven with the synchronous driving mode in all 14 temperature ranges, the memory capacity occupied by all lookup tables will only be 3626 bytes. Although this design can sufficiently decrease the manufacturing cost, the display quality becomes poor at low temperature.

When using the solution of the present invention, for example, the asynchronous driving mode is used for the lower five temperature ranges, and the synchronous driving mode is used for the higher nine temperature ranges, the memory capacity occupied by all lookup tables can be reduced to only 5295 bytes. It is higher than the case of using synchronous driving mode for all temperature ranges

(3626 bytes), but is lower than the case of using asynchronous driving mode for all temperature ranges (8302 bytes). Moreover, because the asynchronous driving mode is used for the low temperature ranges, the electronic label device 1 of this invention can achieve the flexible control of the driving mode, and can have good optical performance and good display quality at low temperature ranges. Meanwhile, the overall manufacturing cost of the electronic label device 1 will not increase too much.

**Table 1**

| driving mode | variability | occupied memory capacity of lookup table for each temperature range (byte) | number of temperature ranges | total occupied memory capacity (byte) | notes |
|---|---|---|---|---|---|
| asynchronous | good | 593 | 14 | 8302 | |
| synchronous | Poor | 233 | 14 | 3262 | |
| asynchronous + synchronous | Good | asynchronous (593) | asynchronous (5) | 5295 | 1∼5 are asynchronous, and 6∼14 are synchronous. |
| | | synchronous (233) | synchronous (9) | | |

In summary, in the electronic label device of this invention, the driving chip can drive the E-paper film to display images, the memory unit of the driving chip to store a plurality of lookup tables corresponding to a plurality of temperature ranges. Each of the lookup tables includes an index corresponding to one of the temperature ranges and a plurality of processing procedures for multiple display colors of the E-paper film, and the index indicates a driving mode of the processing procedures. Based on the above-mentioned design, compared to the conventional art, the electronic label device of this invention can flexibly adjust the driving mode to meet the display quality requirements at different temperatures, so that this invention has good application flexibility and good display quality, and the increased overall cost can be sufficiently limited.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. An electronic label device, comprising:
a display module comprising a driving substrate and an E-paper film, wherein the E-paper film is disposed on the driving substrate; and
a driving chip disposed on the driving substrate and electrically connected to the driving substrate, wherein the driving chip drives the E-paper film to display images through the driving substrate;
wherein, the driving chip comprises a memory unit, the memory unit stores a plurality of lookup tables corresponding to a plurality of temperature ranges, each of the lookup tables comprises an index corresponding to one of the temperature ranges and a plurality of processing procedures for multiple display colors of the E-paper film, and the index indicates a driving mode of the processing procedures.

2. The electronic label device of claim 1, wherein the E-paper film comprises an electrophoretic material.

3. The electronic label device of claim 1, wherein each of the lookup tables further comprises a processing procedure corresponding to a common voltage of the multiple display colors.

4. The electronic label device of claim 1, wherein the driving mode comprises a synchronous driving mode and an asynchronous driving mode.

5. The electronic label device of claim 1, wherein the memory unit comprises an OTP ROM or an MTP ROM.

6. The electronic label device of claim 1, wherein the driving chip further comprises a scan driving circuit, the driving substrate comprises a plurality of pixel units, and the scan driving circuit is electrically connected to the pixel units via a plurality of scan lines.

7. The electronic label device of claim 6, wherein the driving chip further comprises a data driving circuit, and the data driving circuit is electrically connected to the pixel units via a plurality of data lines.

8. The electronic label device of claim 1, further comprising:
a system circuit board electrically connected to the driving substrate and the driving chip.

9. The electronic label device of claim 8, further comprising:
a connection circuit board connected to the system circuit board and the driving substrate, wherein the system circuit board is electrically connected to the driving substrate and the driving chip via the connection circuit board.
